# EUROPÄISCHE PATENTSCHRIFT

(11) **EP 1 755 912 B1**
(45) Veröffentlichungstag und Bekanntmachung des Hinweises auf die Patenterteilung: **07.07.2010**
(21) Anmeldenummer: 05744672.6
(22) Anmeldetag: 23.05.2005
(51) Int. Cl.: B60K 6/48, B60W 20/00, B60W 10/06, B60W 10/08

(54) **VERFAHREN ZUM BETREIBEN EINES HYBRIDKRAFTFAHRZEUGS**
METHOD FOR OPERATING A HYBRID MOTOR VEHICLE
PROCEDE PERMETTANT DE FAIRE FONCTIONNER UN VEHICULE AUTOMOBILE HYBRIDE

(30) Priorität: 25.05.2004 DE 102004025460
(43) Veröffentlichungstag der Anmeldung: 28.02.2007
(73) Patentinhaber: Bayerische Motoren Werke Aktiengesellschaft, 80809 München (DE)
(72) Erfinder: GEBERT, Jürgen, 85368 Moosburg (DE); FENKART, Marcel, 80335 München (DE)
(86) Internationale Anmeldenummer: PCT/EP2005/005563
(87) Internationale Veröffentlichungsnummer: WO 2005/115785

(56) Entgegenhaltungen:
- DE-A1- 10 040 198
- DE-A1- 10 049 510
- DE-A1- 10 119 475
- DE-A1- 10 127 782
- DE-A1- 10 149 897
- DE-A1- 10 222 425
- DE-A1- 10 244 159

## Beschreibung

Die Erfindung betrifft ein Verfahren zum Betreiben eines Hybridkraftfahrzeugs gemäß dem Oberbegriff des Anspruchs 1. Ein solches Verfahren ist in der DE 102 44 159 offenbart.

Aus der DE 40 40 310 A1 ist ein derartiges Verfahren bereits bekannt. Hierbei wird während der Anfahrperiode des Fahrzeugs, dieses ausschließlich mittels Elektromotor betrieben. In dieser Phase wird der der Brennkraftmaschine vorgeschaltete Teil der Anlage auf Betriebstemperatur aufgeheizt, um eine möglichst schadstoffarme Verbrennung bei Inbetriebnahme der Brennkraftmaschine zu gewährleisten. Nach der Aufheizphase erfolgt die fließende Umschaltung von Elektromotorantrieb auf Brennkraftmaschinenantrieb automatisch innerhalb kürzester Zeit. Bei einem derartigen Verfahren - welches elektrische Energie zum einen für den Fahrzeugantrieb in der Anfahrphase und zum anderen für die Aufheizung von Anlagenkomponenten der Brennkraftmaschine erfordert - wird über eine längere Zeit ein deutlich erhöhter Bedarf an elektrischer Energie benötigt. Zur Bereitstellung dieser erhöhten Energiemenge wird ein, im Vergleich zu herkömmlichen und ausschließlich mittels Brennkraftmaschine betriebenen Fahrzeugen, vergrößerter Energiespeicher benötigt.

Ferner ist aus der DE 44 22 647 A1 ein Verfahren zum Betreiben eines Hybridfahrzeugs bekannt, bei dem grundsätzlich die geforderte Antriebsleistung durch die Brennkraftmaschine bereitgestellt wird und nur für den Fall, dass der elektrische Energiespeicher eine ausreichende Ladung aufweist, wird ein Teil der geforderten Antriebsleistung durch die elektrische Maschine bereitgestellt.

Der Erfindung liegt die Aufgabe zugrunde ein Verfahren anzugeben, welches innerhalb möglichst kurzer Zeit einen möglichst schadstoffarmen Betrieb des Kraftfahrzeugs gewährleistet.

Erfindungsgemäß wird die Aufgabe durch die Gesamtheit der Merkmale des Anspruchs 1 gelöst. Durch die betriebsparameterabhängige Momentenaufteilung für den Antrieb eines Kraftfahrzeugs kann eine schnellstmögliche Erwärmung der Brennkraftmaschine gewährleistet werden.

So wird vorzugsweise unterhalb einer bestimmten Schwellenwerttemperatur der Brennkraftmaschine das Moment zum Antrieb des Fahrzeugs ausschließlich durch die Brennkraftmaschine selbst aufgebracht und während dieser Zeit die elektrische Maschine als zusätzliche Last über die Brennkraftmaschine angetrieben. Die elektrische Maschine arbeitet dabei im generatorischen Betrieb und speist die hierbei erzeugte elektrische Energie entweder in einen elektrischen Energiespeicher oder in einen mit der Brennkraftmaschine wärmegekoppelten Wärmetauscher oder anteilig in beide bzw. alle darüber hinaus ggf. zu versorgenden elektrischen Verbraucher. Durch die gezielte zusätzliche Belastung der Brennkraftmaschine erreicht diese innerhalb kürzester Zeit einen Zustand mit einer Betriebstemperatur für eine schadstoffoptimale Verbrennung.

Als Parameter in deren Abhängigkeit die Momentenaufteilung erfolgt sind neben der Temperatur der Brennkraftmaschine alternativ oder zusätzlich insbesondere vorgesehen: die Temperatur der elektrischen Maschine, die Temperatur des elektrischen Speichermittels, die Drehzahl der Brennkraftmaschine und/oder die Drehzahl der elektrischen Maschine. Die Betriebsparameter können entweder messtechnisch erfasst oder über hinterlegte Modelle, die die entsprechenden Prozesse abbilden, rechnerisch ermittelt werden.

Mit Vorteil wird als elektrischer Speicher eine Kondensatoranordnung verwendet. Hierfür eignen sich insbesondere Hochleistungskondensatoren, sogenannte Supercaps, die eine hohe Energiemenge für eine kurze Zeitdauer bereitzustellen in der Lage sind. Besonders vorteilhaft ist die Verwendung der Supercaps, da diese im Vergleich zu herkömmlichen Batterien innerhalb kürzester Zeit wieder aufladbar (und somit wieder betriebsbereit) sind. Die Supercaps können somit innerhalb kürzester Zeit durch die über die Brennkraftmaschine im generatorischen Betrieb angetriebene elektrische Maschine und/oder durch Rekuperation während des Bremsbetriebs aufgeladen werden.

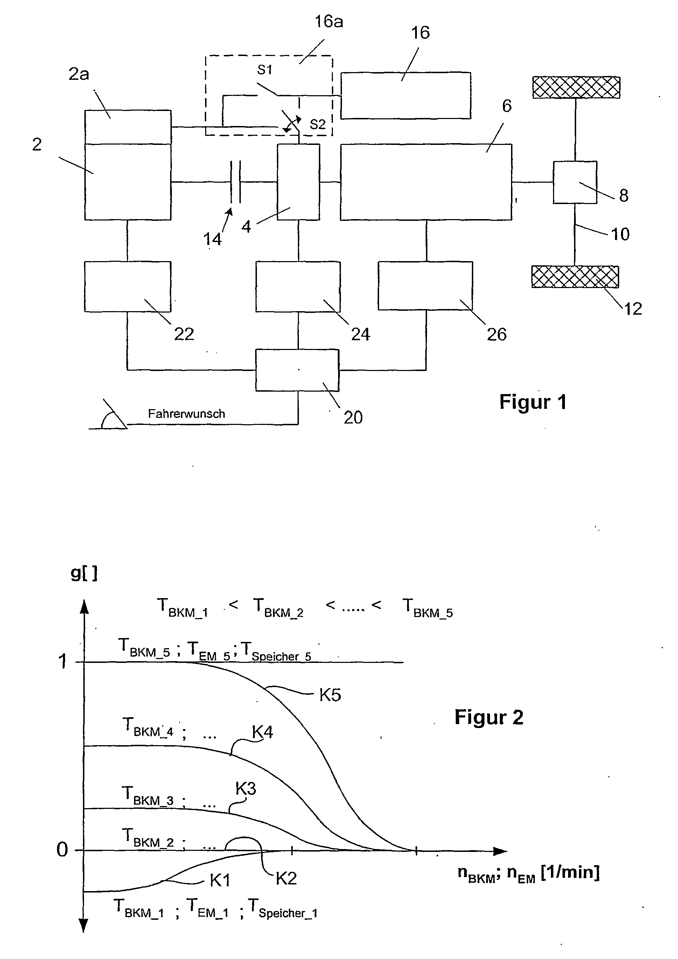

In einer besonders bevorzugten Ausführung der Erfindung wird neben der unteren Schwellenwerttemperatur der Brennkraftmaschine auch eine obere Schwellenwerttemperatur der Brennkraftmaschine bestimmt, wobei das Hybridfahrzeug unterhalb der ersten Schwellenwerttemperatur ausschließlich durch die Brennkraftmaschine, ab Erreichen der unteren bis zur oberen Schwellenwerttemperatur im Mischbetrieb - parameterabhängig anteilmäßig durch die Brennkraftmaschine und anteilmäßig durch die elektrische Maschine, und oberhalb der oberen Schwellenwerttemperatur (soweit dies durch die elektrische Maschine alleine möglich ist) ausschließlich durch die elektrische Maschine betrieben wird. Die Temperatur-Schwellenwerte sind in Abhängigkeit von weiteren Betriebsparametern veränderbar (siehe Beschreibung zu Figur 2).

Durch das erfindungsgemäße Verfahren wird die Brennkraftmaschine ausgehend von einem kalten Betriebszustand (Lastpunktanhebung unterhalb einer ersten Schwellenwerttemperatur) innerhalb kürzester Zeit in einen betriebswarmen Zustand mit optimalen Verbrennungseigenschaften überführt. Ferner wird innerhalb des betriebswarmen Zustands der Brennkraftmaschine der Antrieb des Fahrzeugs entweder teilweise mit der elektrischen Maschine gemeinsam (Lastpunktabsenkung oberhalb der ersten Schwellenwerttemperatur) oder aber gänzlich von dieser alleine (oberhalb einer zweiten Schwellenwerttemperatur) durchgeführt. Oberhalb der zweiten Schwellenwerttemperatur wird das aufgrund eines Fahrerwunsches angeforderte Drehmoment - soweit es von der elektrischen alleine aufgebracht werden kann - von dieser alleine umgesetzt. Ist das angeforderte Drehmoment so groß, dass es durch die elektrische Maschine alleine nicht umsetzbar ist, wird die Brennkraftmaschine zur Aufbringung des Differenzmomentes zumindest zeitweise anteilig über die Kupplung zugeschaltet.

Weitere Merkmale und Vorteile der Erfindung sind den weiteren Unteransprüchen, den Figuren sowie der folgenden Figurenbeschreibung zu entnehmen.

Im Folgenden wird die Erfindung anhand von Figuren näher erläutert. Es zeigen:
- Figur 1:: die schematische Darstellung eines Hybridantriebs zur Durchführung des erfindungsgemäßen Verfahren, und
- Figur 2:: die schematische Darstellung einer Antriebs- Momentenaufteilung zwischen einer Brennkraftmaschine und einer elektrischen Maschine anhand eines Diagramms.

Figur 1 zeigt die für das Verständnis des erfindungsgemäßen Verfahrens wesentlichen Komponenten eines Hybridkraftfahrzeugs. Der Antriebsstrang umfasst in Serie hintereinander angeordnet eine Brennkraftmaschine 2, eine elektrische Maschine 4, eine Getriebeanordnung 6 sowie eine über ein Differential 8 angetriebene Antriebsachse 10 mit zwei Antriebsrädern 12. Innerhalb des Antriebsstrangs sind die Brennkraftmaschine 2 und die elektrische Maschine 4 über eine Kupplung 14 miteinander kraftmäßig koppelbar. Die Brennkraftmaschine 2 ist vorzugsweise mit einem im Kühlmittelkreislauf der Brennkraftmaschine 2 angeordneten und elektrisch betreibbaren Wärmetauscher 2a wärmegekoppelt. Zur Speicherung der elektrischen Energie und zur Versorgung der elektrischen Maschine 4 und/oder des Wärmetauschers 2a mit elektrischer Energie ist eine elektrische Speichereinrichtung 16 vorhanden. Vorzugsweise ist diese als Kondensatoranordnung - insbesondere bestehend aus sogenannten Supercaps (Hochleistungskondensatoren zur Speicherung großer Energiemengen) - ausgebildet. Die Energieversorgung weiterer elektrischer Verbraucher erfolgt vorzugsweise über eine herkömmliche Batterie - sie kann aber auch, zumindest anteilig, über eine DC/DC-Wandlereinheit durch die Kondensatoranordnung erfolgen.

Zur Momentenverteilung gemäß dem erfindungsgemäßen Verfahren ist ein Momentenmanager 20 vorhanden, der in Abhängigkeit von einem Fahrerwunsch FW (Fahrpedalposition, Drosselklappenposition, ...) und in Abhängigkeit von Betriebsparametern des Fahrzeugs über eine erste Motorsteuerung 22 die Brennkraftmaschine 2, über eine zweite Motorsteuerung 24 die elektrische Maschine 4 und über eine Getriebesteuerung 26 das Getriebe 6 ansteuert und das angeforderte Moment auf die Brennkraftmaschine 2 und die elektrische Maschine 4 verteilt. Bei einem Fahrzeug mit manuell zu schaltendem Getriebe erfolgt die Momentenverteilung für die jeweils eingestellte Gangstufe - bei einem Fahrzeug mit Automatikgetriebe wird eine optimale Momentenverteilung für eine als optimal ermittelte Gangstufe ermittelt und die optimale Gangstufe entsprechend automatisch eingestellt. Die Momentensteuerung 20, 22, 24 wird vorzugsweise programmtechnisch in ein Motorsteuergerät implementiert. Ferner ist über das Motorsteuergerät der Energiespeicher 16 bzw. eine diesem zugeordnete Logik 16a ansteuerbar derart, dass die im Energiespeicher 16 vorhandene Energie, je nach Ladungszustand des Energiespeichers 16 und je nach Energieanforderung durch die elektrischen Verbraucher (insbesondere elektrische Maschine 4 und Wärmetauscher 2a), verteilt wird. Auch für die gezielte Aufladung der Speichereinrichtung 16 in Abhängigkeit von deren Ladungszustand und ggf. die gleichzeitige Versorgung des Wärmetauschers 2a über die generatorisch betriebene elektrische Maschine 4 wird die Logik 16a über das Motorsteuergerät entsprechend angesteuert.

Im Unterschied zu herkömmlichen Verfahren zum Betreiben eines Hybridfahrzeugs wird gemäß der Erfindung der Elektromotor 4 zur Unterstützung (Lastpunktabsenkung) der Brennkraftmaschine 2, insbesondere während des Anfahrvorgangs (sowohl beim Anfahren unmittelbar nach der Inbetriebnahme des Fahrzeugs, als auch beim ständigen Anfahren in einem stop-and-go Betrieb bzw. allgemein: beim Beschleunigen aus kleinen Drehzahlen), eingesetzt. Der Anfahrvorgang ist bezüglich des Verbrauchs und der Emissionen sehr ungünstig - die Unterstützung durch die elektrische Maschine 4 wirkt sich verbrauchs- und emissionsmindernd aus. Der Anteil von Brennkraftmaschine 2 und elektrischer Maschine 4 bezüglich des angeforderten Antriebsmoments (Fahrerwunsch) wird abhängig von der Drehzahl n_{EM} der elektrischen Maschine 4 und/oder der Drehzahl n_{BKM} der Brennkraftmaschine 2 in Verbindung mit der Temperatur T_{BKM_1}, ..., T_{BKM_5} der Brennkraftmaschine 2 vorgegeben. Hierfür ist bevorzugt ein Kennfeld gemäß Figur 2 in einem Motorsteuergerät hinterlegt. Die Summe der anteiligen Antriebsmomente ist immer durch den Fahrerwunsch FW vorgegeben. Das erfindungsgemäße Verfahren soll im Folgenden anhand der Figur 2 erläutert werden.

Figur 2 zeigt verschiedene Kennlinien K1, ..., K5 zur betriebsparameterabhängigen Momentenaufteilung zwischen Brennkraftmaschine 2 und elektrischer Maschine 4. Auf der y-Achse ist dabei die Momentenverteilung g angegeben, während auf der x-Achse die Drehzahl n_{BKM} der Brennkraftmaschine 2 bzw. die Drehzahl n_{EM} der elektrischen Maschine 4 oder ein aus diesen beiden Werten ermittelter Faktor abgebildet ist. Zwischen diesen Achsen sind versuchstechnisch ermittelte Kurvenverläufe (Kennlinien K1, ..., K5) für unterschiedliche Temperaturen T_{BKM_1}, ..., T_{BKM_5} der Brennkraftmaschine 2 eingezeichnet. Dabei muss sich die Abhängigkeit nicht alleine auf die Temperatur Tg_{hM_1}, ..., T_{BKM_5} der Brennkraftmaschine 2 beziehen - es können vielmehr auch andere Betriebsparameter wie die Temperatur der elektrischen Maschine 4 und/oder die Temperatur der Energiespeichereinrichtung 16 und/oder die Drehzahl n_{BKM} der Brennkraftmaschine 2 und/oder die Drehzahl n_{EM} der elektrischen Maschine 4 mit einbezogen bzw. alternativ verwendet werden. Die Momentenverteilung g nimmt in der Regel einen Wert zwischen Null und Eins ein, wobei bei g=0 der Antrieb ausschließlich durch die Brennkraftmaschine 2 (Kennlinie K2), bei g=1 ausschließlich durch die elektrische Maschine 4 (Kennlinie K5) und bei einem Wert 0<g<1 anteilig, in Abhängigkeit von den Betriebsparametern (Kennlinie K3, K4), durch beide Maschinen gemeinsam erfolgt. Nimmt g einen Wert kleiner Null an, bedeutet dies, dass das Moment der Brennkraftmaschine 2 größer ist, als der vorliegende Fahrerwunsch FW. Die Momentendifferenz wird dann durch die generatorisch betriebene elektrische Maschine 4 ausgeglichen (Kennlinie K1) und die hierbei erzeugte elektrische Energie dem Wärmetauscher 2a für einen zusätzlichen Wärmeeintrag in die Brennkraftmaschine 2 und/oder der Energiespeichereinrichtung 16 zu deren Aufladung zugeführt. Vorzugsweise ist die elektrische Maschine 4 thermisch an den Kühlwasserkreislauf der Brennkraftmaschine 2 gekoppelt derart, dass die durch die elektrische Maschine 4 erzeugte Wärme (Eigenwärme) zum Zwecke einer beschleunigten Aufheizung der Brennkraftmaschine 2 dieser zugeführt wird. Diese zusätzliche Wärmeeinkopplung erfolgt mit Vorteil gesteuertinsbesondere in Abhängigkeit der jeweils vorliegenden Brennkraftmaschinentemperatur.
Auch kann - im Falle eines entsprechenden Ladungszustands der Energiespeichereinrichtung 2a - die elektrische Energie für einen zusätzlichen Wärmeeintrag mittels Wärmetauscher 2a in die Brennkraftmaschine 2 durch Energieeinspeisung aus der Energiespeichereinrichtung 2a erfolgen. Hierfür ist die Logik 16a über das Motorsteuergerät in entsprechender Weise anzusteuern. Die Logik 16a beinhaltet hierfür insbesondere zwei ansteuerbare Schaltmittel S1, S2, wobei über das erste Schaltmittel S1 die Energiespeichereinrichtung 16 an den Wärmetauscher 2a ankoppelbar ist und über das Schaltmittel S2 die elektrische Maschine 4 wahlweise mit der Energiespeichereinrichtung 16 oder mit dem Wärmetauscher 2a verbindbar ist.

Die fünf dargestellten Kennlinien K1, ..., K5 veranschaulichen den gemäß der Erfindung gesteuerten Anfahrvorgang eines Hybridfahrzeugs für unterschiedliche Temperaturen der Brennkraftmaschine 2. Im kalten Zustand der Brennkraftmaschine - dargestellt durch die Kennlinie K1 bei einer Brennkraftmaschinentemperatur T_{BKM_1} unterhalb einer bestimmten Schwellenwerttemperatur-wird das Fahrzeug ausschließlich durch die Brennkraftmaschine 2 angetrieben und es wird ein Moment erzeugt, welches größer ist, als es dem Moment aufgrund des Fahrerwunsches entspricht. In diesem Fall wird mittels dem erzeugten überschüssigen Differenzmoment die elektrische Maschine 4 generatorisch betrieben. Vorzugsweise wird die hierbei erzeugte elektrische Energie in Abhängigkeit von der Temperatur der Brennkraftmaschine 2 unmittelbar dem Wärmetauscher 2a zugeführt. Durch die zusätzliche Belastung der Brennkraftmaschine 2 und die gleichzeitige zusätzliche Wärmeeinprägung in die Brennkraftmaschine 2 wird die erforderliche Zeit zur Aufwärmung der Brennkraftmaschine auf Betriebstemperatur erheblich verkürzt. Bei Erreichen eines bestimmten Betriebparameterzustands - hier dem Erreichen einer bestimmten Motordrehzahl n_{BKM}, n_{EM} bei einer bestimmten Brennkraftmaschinentemperatur-wird die zusätzliche Last abgeworfen und das Fahrzeug im normalen Betrieb mittels Brennkraftmaschine ohne generatorischen Betrieb der elektrischen Maschine 4 betrieben.

Auch aufgrund der Kennlinie K2 - bei einer Brennkraftmaschinentemperatur T_{BKM_2} - wird das Fahrzeug während des Anfahrvorgangs ausschließlich durch die Brennkraftmaschine 2 angetrieben. Aufgrund der im Vergleich zur Brennkraftmaschinentemperatur T_{BKM_1} erhöhten Starttemperatur T_{BKM_2} ist eine zusätzliche Last während des Anfahrvorgangs nicht erforderlich, so dass das Fahrzeug von Beginn an im normalen (ausschließlichen) Brennkraftmaschinenbetrieb betrieben wird.
Die Kennlinien K3 und K4 gehen von Anfangszuständen aus, in denen die Brennkraftmaschine 2 bereits eine Temperatur T_{BKM_3}, T_{BKM_4} oberhalb der unteren Schwellenwerttemperatur hat, bei der sie demgemäß bereits schadstoffarm betrieben werden kann, so dass bereits eine anteilig geringe Entlastung der Brennkraftmaschine 2 durch die Einspeisung eines zusätzlichen Antriebsmomentes über die elektrische Maschine 4 möglich ist. Bei einer Brennkraftmaschinentemperatur T_{BKM_5} hat die Brennkraftmaschine bereits eine Temperatur oberhalb einer oberen Schwellenwerttemperatur erreicht, bei welcher der Antrieb für eine gewisse Zeit ausschließlich über die elektrische Maschine 4 erfolgen kann, ohne das die Brennkraftmaschine 2 innerhalb dieser Zeit derart abkühlt; dass sie nach Ablauf dieser Zeit nicht schadstoffoptimal arbeiten könnte.

Alle Kennlinien K1, ..., K5 sind derart ausgelegt, dass in Abhängigkeit der Betriebsparameter nach einer gewissen Zeit bzw. bei Vorliegen bestimmter Betriebsparameterzustände (hier: Erreichen einer Motordrehzahl n_{Grenz_1}, ..., n_{Grenz_5} bei einer bestimmten Brennkraftmaschinentemperatur) der weitere Antrieb im schadstoffoptimalen Betriebszustand ausschließlich über die Brennkraftmaschine 2 erfolgt.

## Patentansprüche

1. Verfahren zum Betreiben eines Hybridfahrzeugs, welches
- als Fahrantrieb zum einen eine Brennkraftmaschine (2) und zum anderen eine elektrische Maschine (4) aufweist, wobei die elektrische Maschine (4) sowohl motorisch als auch generatorisch betreibbar ist,
- eine Speichereinrichtung (16), insbesondere eine Kondensatoranordnung, zur Speicherung elektrischer Energie aufweist,
wobei zumindest im Anfahrbetrieb das aufgrund eines Fahrerwunsches angeforderte Moment zum Antrieb des Fahrzeugs in Abhängigkeit von Betriebsparametern des Fahrzeugs zwischen der Brennkraftmaschine (2) und der elektrischen Maschine (4) zwecks Erzeugung aufgeteilt wird, **dadurch gekennzeichnet, dass**
- unterhalb einer bestimmten unteren Schwellenwerttemperatur der Brennkraftmaschine (2) das Moment zum Antrieb des Fahrzeugs ausschließlich über die Brennkraftmaschine (2) aufgebracht wird und während dieser Zeit die elektrische Maschine (4) als zusätzliche Last über die Brennkraftmaschine (2) angetrieben im generatorischen Betrieb betrieben wird, und
- ab Erreichen der unteren Schwellenwerttemperatur der Brennkraftmaschine (2) das Moment zum Antrieb des Fahrzeugs durch Brennkraftmaschine (2) und elektrische Maschine (4) gemeinsam aufgebracht wird, und
- ab Erreichen einer oberen Schwellenwerttemperatur der Brennkraftmaschine (2) das Moment zum Antrieb des Fahrzeugs - soweit es durch die elektrische Maschine alleine bereitstellbar ist - ausschließlich durch die elektrische Maschine (4) aufgebracht wird.

2. Verfahren nach einem der vorstehenden Ansprüche,
**dadurch gekennzeichnet, dass** für den Fall, dass das aufgrund eines Fahrerwunsches angeforderte Moment kleiner als das von der Brennkraftmaschine (2) erzeugte Moment ist, die elektrische Maschine (4) im Generatorbetrieb betrieben wird.

3. Verfahren nach einem der vorstehenden Ansprüche,
**dadurch gekennzeichnet, dass** der Ladezustand des Energiespeichers (16) überwacht wird und für den Fall, dass ein unterer Ladezustandsschwellenwert unterschritten wird, die elektrische Maschine (4) im generatorischen Betrieb betrieben und die erzeugte elektrische Energie dem elektrischen Speicher (16) zum Zwecke seiner Aufladung zugeführt wird bis ein oberer Ladezustandsschwellenwert erreicht ist.

4. Verfahren nach einem der vorstehenden Ansprüche,
**dadurch gekennzeichnet, dass** die Betriebstemperatur der Brennkraftmaschine (2) ermittelt wird und in Abhängigkeit von der ermittelten Temperatur einem elektrischen Wärmetauscher (2a) elektrische Energie zum Zwecke eines Wärmeeintrags in die Brennkraftmaschine (2) zugeführt wird.

5. Verfahren nach Anspruch 4,
**dadurch gekennzeichnet, dass** die elektrische Energie dem Wärmetauscher (2a) aus dem elektrischen Speichermittel (16) und/oder über die generatorisch betriebene elektrische Maschine (4) zugeführt wird.

## Claims

1. A method for operating a hybrid vehicle, which
- as a travel drive, on the one hand, has an internal combustion engine (2) and, on the other hand, has an electric engine (4), wherein the electric engine (4) can be operated both in an engine mode and in a generator mode,
- has a storage device (16), more especially a capacitor arrangement, for storing electric energy, wherein at least in starting mode, the torque requested by the driver to drive the vehicle, as a function of operating parameters of the vehicle, is divided between the internal combustion engine (2) and the electric engine (4) for the purpose of generation, **characterised in that**
- below a specific lower threshold temperature of the internal combustion engine (2), the torque to drive the vehicle is provided exclusively by the internal combustion engine (2) and, during this period, the electric engine (4), driven as an additional load by the internal combustion engine (2), is operated in generator mode, and
- from the point of reaching the lower threshold temperature of the internal combustion engine (2), the torque to drive the vehicle is provided by the internal combustion engine (2) and electric engine (4) together, and
- from the point of reaching an upper threshold temperature of the internal combustion engine (2), the torque to drive the vehicle - if it can be provided by the electric engine alone - is exclusively provided by the electric engine.

2. A method according to any one of the preceding claims, **characterised in that** if the torque requested by the driver is smaller than the torque generated by the internal combustion engine (2), the electric engine (4) is operated in generator mode.

3. A method according to any one of the preceding claims, **characterised in that** the charge state of the energy accumulator (16) is monitored and if a lower charge state threshold is fallen below, the electric engine (4) is operated in generator mode and the electric energy generated is fed to the electric accumulator (16) for the purpose of charging until an upper charge state threshold is reached.

4. A method according to any one of the preceding claims, **characterised in that** the operating temperature of the internal combustion engine (2) is determined and, as a function of the temperature determined, electric energy is fed to an electric heat exchanger (2a) for the purposes of introducing heat into the internal combustion engine (2).

5. A method according to claim 4, **characterised in that** the electric energy is fed to the heat exchanger (2a) from the electric storage means (16) and/or by means of the electric engine (4) driven in generator mode.

## Revendications

1. Procédé de gestion d'un véhicule hybride comportant :
- comme moyen moteur, d'une part un moteur à combustion (2) et d'autre part une machine électrique (4), fonctionnant à la fois comme moteur et comme générateur,
- une installation de stockage (16), notamment un dispositif à condensateurs pour stocker de l'énergie électrique,
- au moins en mode de démarrage, le couple nécessaire selon la demande du conducteur, pour entraîner le véhicule étant réparti pour être généré en fonction des paramètres de fonctionnement du véhicule entre le moteur à combustion (2) et la machine électrique (4),
**caractérisé en ce que**
- en dessous d'une certaine valeur de seuil de température inférieure du moteur à combustion (2), le couple d'entraînement du véhicule est fourni exclusivement par le moteur à combustion (2) et pendant ce temps, la machine électrique (4) fonctionne comme charge supplémentaire en mode de générateur entraîné par le moteur à combustion (2), et
- lorsqu'on atteint le seuil inférieur de température du moteur à combustion (2) le couple d'entraînement du véhicule est fourni en commun par le moteur à combustion (2) et par la machine électrique (4), et
- une fois atteint un seuil supérieur de température du moteur à combustion (2), le couple d'entraînement du véhicule (dans la mesure où il est fourni uniquement par la machine électrique), est appliqué exclusivement par la machine électrique (4).

2. Procédé selon la revendication 1,
**caractérisé en ce que**
dans le cas où le couple demandé par le conducteur est inférieur au couple généré par le moteur à combustion (2), la machine électrique (4) fonctionne en mode générateur.

3. Procédé selon l'une des revendications précédentes,
**caractérisé en ce qu'**
on surveille l'état de charge de l'accumulateur d'énergie (16) et au cas où l'on passe en dessous d'un seuil de charge inférieur, la machine électrique (4) fonctionne en mode générateur et l'énergie électrique générée est fournie à l'accumulateur électrique (16) pour en assurer la charge jusqu'à ce que l'on atteigne un seuil supérieur d'état de charge.

4. Procédé selon l'une des revendications précédentes,
**caractérisé en ce qu'**
on détermine la température de fonctionnement du moteur à combustion (2) et selon la température obtenue, on fournit de l'énergie électrique à un échangeur de chaleur (2a), électrique, pour assurer un apport de chaleur au moteur à combustion (2).

5. Procédé selon la revendication 4,
**caractérisé en ce que**
l'énergie électrique est fournie à l'échangeur de chaleur (2a) à partir de l'accumulateur électrique (16) et/ou par la machine électrique (4) fonctionnant en générateur.
